# EUROPEAN PATENT SPECIFICATION

(11) **EP 4 018 070 B1**
(45) Date of publication and mention of the grant of the patent: **04.10.2023**
(21) Application number: 20785555.2
(22) Date of filing: 19.08.2020
(51) Int. Cl.: E21B 17/18, E21B 17/20, F16L 3/23, F16L 11/22, H02G 3/22, E21B 41/00, E21B 43/013

(54) **SUBSEA UMBILICALS**
UNTERWASSERVERSORGUNSKABEL
CÂBLES OMBILICAUX SOUS-MARINS

(30) Priority: 21.08.2019 GB 201912019
(43) Date of publication of application: 29.06.2022
(73) Proprietor: Subsea 7 Limited, Sutton, Surrey SM2 5BN (GB)
(72) Inventor: PLENDERLEITH, Andrew Campbell, Aberdeen AB21 0PQ (GB)
(74) Representative: Keltie LLP
(86) International application number: PCT/GB2020/051985
(87) International publication number: WO 2021/032976

(56) References cited:
- WO-A1-2017/209617
- CA-A1- 2 895 371
- GB-A- 2 531 601
- GB-A- 2 554 873
- JP-A- S4 971 489
- US-A1- 2008 279 635

## Description

This invention relates to methods for manufacturing subsea umbilicals and to such umbilicals so manufactured. The invention aims to provide an alternative to known solutions for delivering the functions of an umbilical.

A subsea umbilical comprises an elongate body that extends between the surface of the sea and a subsea installation on the seabed, or between items of equipment at mutually-spaced subsea locations. Its purpose is to support the production of hydrocarbon fluids but not to convey such fluids. This distinguishes an umbilical from a subsea flowline, whether the flowline is an intra-field pipeline or an export pipeline extending across the seabed, or a riser extending from the seabed to the surface.

Typically, an umbilical supports production by providing power electrically and/or hydraulically, and by conveying control signals electrically, hydraulically and/or optically. An umbilical may also support production by conveying service fluids such as hydrate inhibitors and other chemicals for flow assurance, or remediation fluids such as dead oil or methanol. Thus, an umbilical typically comprises at least one length of tubing, generally of a corrosion-resistant material such as Duplex^{®} alloy steel, and at least one length of cable for the purposes of monitoring or control or for providing power.

A typical umbilical is described in WO 2011/045582. US 7239781 shows another umbilical cross-section.

The or each tube and the or each cable of an umbilical are typically wrapped together by fillers and held with close mutual spacing by spacers, all within a flexible polymeric outer sheath or jacket that is extruded around the assembly. The spacers are typically of polymeric materials and have a high coefficient of friction with the surrounding inner surface of the jacket. Indeed, WO 2013/128279 extends this approach by interposing a friction-increasing tape between the jacket and the elements within.

As the tubes within an umbilical do not carry production fluids, they have a small inner diameter that is generally of less than two inches (50.8 mm). This small diameter applies especially to tubes that contain control fluids. For those tubes, resistance to internal pressure rather than flowrate is the key criterion, as they rely upon the transmission of pressure fluctuations through the incompressible fluid to actuate equipment such as valves. Cost is also a factor, as typical corrosion-resistant alloys are much more expensive than carbon steel. Small-diameter internal tubing is chosen for all of these reasons.

An umbilical is also characterised by pliancy, which enables the umbilical to be bent easily along its length without damage. Thus, a typical umbilical may be installed by paying it out from a coiled configuration in a basket or carousel or on a spool or reel of a surface vessel, as exemplified in WO 2008/132416. For added pliancy, the tubes and cables may be arranged in a helical configuration.

Whilst the tubes within an umbilical are stiff relative to the cables and the jacket, typical small-diameter alloy tubing is less stiff than equivalent tubing of carbon steel and can be bent easily enough for the purposes of transportation, installation and use. This is another reason why umbilicals are characterised by small-diameter internal tubing.

Umbilicals comprise end fittings, with a connector hub or a flange, which allows connection to a termination plug known as an umbilical termination assembly or UTA. Sometimes, a UTA is fitted to an end of an umbilical and installed with the umbilical, as disclosed in WO 2016/116333.

Due to their complex structure and potentially great length - indeed, US 6901968 envisages lengths in excess of 100km - umbilicals are expensive to manufacture and require dedicated, specialised factories. For example, making a conventional umbilical requires a continuous production line, special extrusion and assembly facilities and other specialised manufacturing equipment. Starting and ramping-up production is risky, especially in relation to extrusion. Manufacturing the UTAs is also complex.

For these reasons, very few manufacturers of umbilicals exist worldwide. Offshore projects therefore suffer increased costs and are vulnerable to any delay or interruption in the supply of the umbilicals that they require.

Further prior art is known from GB2531601 disclosing a pipe-in-pipe assembly having flowline pipes, cables and umbilicals bundled together.

The scope of the invention is set out in independent claims 1 and 17 and has been devised against the background art as discussed above. Alternatives are set out in the dependent claims. In one sense, the invention resides in a subsea control bundle umbilical, comprising: a carrier pipe, which may have an outer diameter of no greater than ten inches (254mm); a bundle of two or more elongate functional elements being tubes and/or cables that extend longitudinally within the carrier pipe; and spacers spaced apart longitudinally along the bundle, the spacers supporting the functional elements of the bundle and being movable longitudinally relative to the carrier pipe.

The carrier pipe suitably contains no tubes with an inner diameter of greater than 70mm, for example no greater than 60mm or no greater than two inches (50.8 mm). Also, any tube within the carrier pipe suitably contains only a control fluid or a service fluid for supporting production of hydrocarbons.

The umbilical may further comprise at least one connection head that is positioned at an end of the carrier pipe and comprises connection elements that are in fluid communication or electrical contact with respective functional elements of the bundle. At least one such connection head may be a towhead that comprises a towing line attachment point, supported by a frame configured for towing the umbilical through water before installation.

At least one spacer of the umbilical may comprise a stack of two or more blocks and at least one opening that extends along a longitudinal axis through the spacer at an interface between abutting blocks of the stack to receive a respective elongate functional element of the umbilical. Outer blocks of the stack support rollers that are angularly spaced in a circular array.

The interface is suitably substantially planar but may be interrupted by at least one open-ended channel for receiving a respective one of the functional elements. In that case, each opening may conveniently be defined by alignment between opposed channels in the abutting blocks of the stack.

For stability, each block of the stack preferably has a thickness on the longitudinal axis that exceeds the height of the block on an axis that is orthogonal to the longitudinal axis and to the interface.

The outer blocks may define chamfered corners of the spacer at which the rollers are supported. Elegantly, the rollers may be supported by brackets that each embrace one of the outer blocks. Each of those brackets may engage at least two blocks of the stack. One or more inner blocks of the stack may be substantially cuboidal.

Frictional force between the abutting blocks of the spacer and one or more of the functional elements at the interface suitably exceeds resistance to movement of the spacer relative to the carrier pipe in a direction parallel to the longitudinal axis.

The carrier pipe may exert radially-inward pressure on the spacer to clamp the functional elements between abutting blocks of the stack. The inward pressure exerted by the carrier pipe may deflect the abutting blocks of the stack into contact along their interface.

The inventive concept embraces a subsea installation that comprises at least one umbilical of the invention.

The inventive concept also embraces a method of making a subsea control bundle umbilical. The method comprises: assembling a bundle comprising two or more spacers that support two or more elongate functional elements being tubes with an inner diameter of no more than 70mm and/or cables, the spacers being spaced apart longitudinally along the bundle; and inserting the bundle into a carrier pipe to extend longitudinally within the carrier pipe, for example by pulling the bundle into the carrier pipe, or by advancing the carrier pipe along the bundle, or by assembling the carrier pipe around the bundle.

The method may further comprise towing the umbilical to an installation site using a towing line attached to a connection head.

Each spacer may be assembled as a stack of two or more blocks, with each functional element extending through the stack at an interface between abutting blocks of the stack. A final block may be added to the stack to complete the spacer immediately before the spacer enters the carrier pipe during insertion of the bundle.

Conveniently, the abutting blocks may be held together only by friction between the blocks and one or more of the functional elements at the interface.

The invention is predicated on the insight that there is an abundant supply of power and data cables and small-diameter steel alloy tubing that are suitable for delivering the control and fluid delivery functions of an umbilical. Thus, whilst conventional umbilicals made from those components have restricted supply, the components themselves are readily available. The invention proposes a new way of bringing together those components to deliver the functions of a conventional umbilical with less restricted global supply and lower cost.

Thus, the invention provides a less expensive alternative to conventional umbilicals, especially for short lengths of less than 1km, for example 200m, and enables existing pipeline production facilities to be repurposed to satisfy the global demand for umbilicals. In this respect, existing pipeline production facilities such as spoolbases are far more numerous globally than specialised umbilical factories. A relatively short length simplifies fabrication, which involves simply inserting the bundle into the carrier pipe. In contrast, specialised umbilical factories are configured to produce much greater lengths and so are ill-equipped to produce shorter lengths quickly and economically with minimal set-up operations.

Utilising existing capability to fabricate pipeline bundle products, the invention proposes the use of a carrier pipe that houses only control or service tubing and control or power cables, supported by lightweight roller clamp spacers. This structure defines a control umbilical, whose primary purpose is to control and power subsea equipment, as distinct from a pipeline bundle, whose primary purpose is to convey production fluids.

The carrier pipe may be sealed at each end, for example using Lycab^{™} seals as supplied by MCT Brattberg AB. UTAs may also be provided at one or both ends. At least one UTA could have a structure that is also capable of serving as a towhead for towing the umbilical through water. This provides a towable control bundle umbilical. Alternatively the umbilical can be spooled onto a reel to be installed by reel-lay methods.

Embodiments of the invention provide a control bundle that comprises a carrier pipe, a bundle inserted into the carrier pipe and at least one termination head. The bundle comprises: at least one power cable; at least one small-diameter tube; and at least one spacer, such as a roller spacer, extending in a transverse plane and connecting the at least one cable and the at least one tube.

The carrier pipe may comprise welded metal pipes or monolithic polymer or polymer composite pipes, such as thermoplastic composite pipe (TCP). A carrier pipe of these materials is stiffer than the polymer jacket that typifies conventional umbilicals, particularly in relation to bending along the length of the umbilical.

Advantageously, the control bundle comprises no production tubing for carrying hydrocarbon well fluids. Thus, in service, the or each small-diameter tube may contain only a hydraulic control fluid such as a hydraulic oil or a service fluid such as methanol or mono-ethylene glycol (MEG).

The control bundle of the invention is apt to be installed by towing or reel-lay. In the former case, the termination head may conveniently serve as a towhead.

Embodiments of the invention also implement a method to manufacture a control bundle. The method comprises the following steps: preparing a bundle by assembling together several spacers, at least one power cable and at least one small-diameter tube; providing a carrier pipe, which may be monolithic; pulling the bundle inside the carrier pipe; and connecting at least one head containing cables, piping and connectors to an end of the bundle, the power cable and the small-diameter tube.

In view of the small diameter of the control bundle, low friction between the various elements allows the spacers to be constructed of simple spacer blocks, without any connection between the blocks other than friction. Thus, embodiments of the invention provide a spacer for a control bundle, the spacer comprising at least two blocks that are piled up or stacked vertically without bonding, screwing, bolting or welding around the cables and tubes of the control bundle. To enable this, at least some of the spacer blocks may comprise at least one roller or low-friction outer surface, so that frictional forces at each interface between the blocks and between the blocks and the cables or tubes is greater than frictional forces between the blocks and the carrier pipe of the control bundle.

Embodiments of the invention therefore also implement a method to assemble a control bundle. The method comprises pre-assembling an inner stack comprising spacers, at least one cable and at least one small-diameter tube. Each spacer comprises at least two spacer blocks in stacked relation. The inner stack is inserted into the carrier pipe, while ensuring that the spacer blocks remain stacked or piled up on insertion or each spacer into the carrier pipe. A final, upper block can be added to the stack of spacer blocks at the last moment before the stack enters the carrier pipe.

In summary, the invention provides a subsea control bundle umbilical that comprises: a carrier pipe; a bundle of elongate functional elements being tubes and/or cables that extend longitudinally within the carrier pipe; and spacers that are spaced apart longitudinally along the bundle. The spacers support the functional elements of the bundle and are movable longitudinally relative to the carrier pipe not only upon insertion during assembly but also during installation of the umbilical and in use of the umbilical.

As the umbilical does not convey production hydrocarbons flowing from a subsea well, any tubes within the carrier pipe have a small inner diameter, typically of no more than 70mm or less. Any such tubes contain only a control fluid or a service fluid for supporting production of hydrocarbons.

Each spacer may comprise a stack of blocks and an opening that extends along a longitudinal axis through the spacer at an interface between abutting blocks of the stack. Each opening receives a respective elongate functional element of the bundle.

In order that the invention may be more readily understood, reference will now be made, by way of example, to the accompanying drawings in which:
Figure 1 is a front view of a spacer for a control umbilical in accordance with the invention, supporting a bundle of parallel elongate functional elements including a group of cables and groups of tubes that serve as fluid conduits in the umbilical;
Figure 2 is a front view of a first block of the spacer shown in Figure 1, being assembled with a first group of the tubes also shown in Figure 1;
Figure 3 is a front view showing a second block of the spacer stacked on the first block with the first group of tubes sandwiched between them, and a second group of the tubes shown in Figure 1 about to be assembled with the second block;
Figure 4 is a front view showing a third block of the spacer stacked on the second block with the second group of tubes sandwiched between them, and a third group of the tubes shown in Figure 1 about to be assembled with the third block;
Figure 5 is a front view showing a fourth block of the spacer stacked on the third block with the third group of tubes sandwiched between them, and a group of the cables shown in Figure 1 about to be assembled with the fourth block;
Figure 6 is a schematic part-sectional side view showing the blocks of the spacer, the tubes and the cables shown in Figures 1 to 5 being brought together, assembled together and pulled together into a carrier pipe;
Figure 7 is a cross-sectional view through the carrier pipe on line VII-VII of Figure 6, showing the spacer assembled from the blocks and the tubes and cables supported by the spacer;
Figure 8 is a sectional perspective view of the carrier pipe shown in Figures 6 and 7, containing the spacer and the tubes and cables supported by the spacer;
Figure 9 is a perspective view of a control umbilical of the invention including UTAs at its opposed ends;
Figure 10 is an enlarged view of one of the UTAs corresponding to Detail X of Figure 9;
Figure 11 is a schematic side view of the control umbilical shown in Figure 9, being towed to an offshore installation site at mid-water depth;
Figure 12 is a schematic side view of the control umbilical shown in Figure 9, now installed on the seabed at the offshore installation site and connected to other subsea equipment;
Figure 13 is a schematic side view of the control umbilical shown in Figure 9, being towed to an offshore installation site at the surface; and
Figure 14 is a schematic side view of the control umbilical shown in Figure 9, now installed and extending between a surface installation and equipment on the seabed.

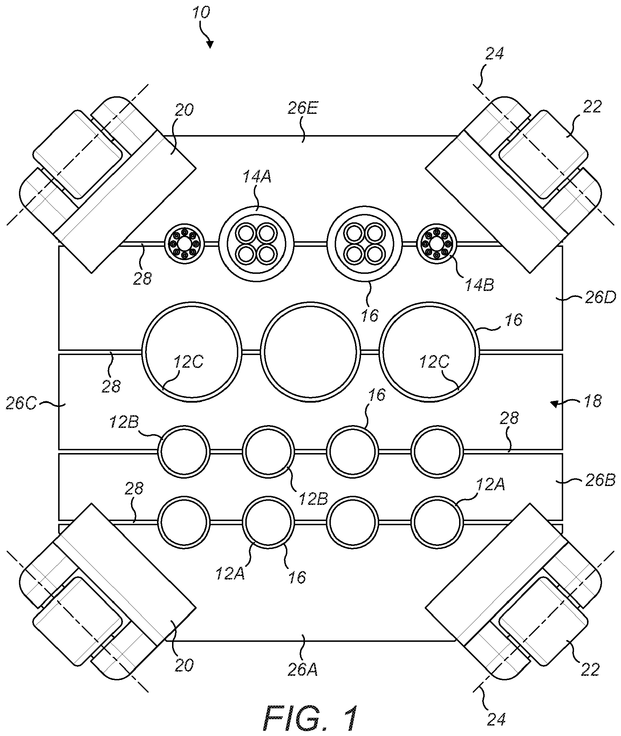

Figure 1 shows a spacer 10 for an umbilical in accordance with the invention, supporting groups of parallel bundled elongate functional elements that penetrate the spacer 10, namely tubes 12 and cables 14. Each tube 12 and cable 14 extends through a respective through-hole 16 in the spacer 10. The through-holes 16 extend from a planar front face 18 to a parallel planar rear face of the spacer 10 that is not visible in this frontal view.

The tubes 12, also known in the art as fluid cores or fluid lines, may be made of carbon steel but are preferably made of corrosion-resistant steel alloys such as Duplex° steel. However, other materials such as polymer composites could be used instead.

The tubes 12 comprise first and second groups of smaller-diameter tubes 12A, 12B and a third group of larger-diameter tubes 12C. In use, the smaller-diameter tubes 12A, 12B are apt to carry hydraulic oil or another fluid for powering or controlling subsea equipment. Conversely, the larger-diameter tubes 12C are apt to carry a flow of service fluids, such as methanol or MEG, for supporting the production of oil and gas.

The tubes 12 have a small internal diameter, typically of less than two inches (50.8mm), but may be tens or hundreds of metres long to correspond to the length of the umbilical.

The cables 14 are also grouped together. They comprise power cables 14A, also known in the art as power cores, and control cables 14B, each containing electrical conductors. There could also be data cables, which may contain optical fibres, but such cables have been omitted from this simplified view.

The spacer 10 is substantially square in the frontal view shown in Figure 1, save for planar corners that are chamfered at 45° to the adjacent sides of the square. At each of the chamfered corners, the spacer 10 is embraced by a C-section bracket 20 that wraps around the corner onto the front face 18 and the rear face.

Each bracket 20 supports a respective roller 22 that turns about an axis 24 parallel to the plane of the associated chamfered corner. Thus, the axis 24 of each roller 22 is orthogonal to the axes 24 of the rollers 22 at neighbouring corners but is parallel to the axis 24 of the roller 22 at the diagonally-opposed corner. Further, the axes 24 of the rollers 22 are co-planar with each other, lying in a plane that is disposed between, and parallel to, the front face 18 and the rear face.

Each tube 12 and cable 14 is held snugly within a respective one of the through-holes 16. Thus, the diameters of the through-holes 16 match the outer diameters of the associated tubes 12 and cables 14. The through-holes 16 extend through the spacer 10 on parallel longitudinal axes that extend orthogonally with respect to the planes of the front face 18 and the rear face.

The spacer 10 has a layered structure that comprises a stack of spacer blocks 26. Each spacer block 26 is a monolithic mass or a hollow body of a moulded or machined polymer material such as polyurethane. As will be explained, each spacer block 26 is shaped to embrace, engage and support at least one group of the tubes 12 or cables 14 that extend through the spacer 10.

The thickness of the spacer 10 from the front face 18 to the rear face exceeds the height of each spacer block 26 in a direction parallel to the front face 18 or the rear face. However, the thickness of the spacer 10 is significantly less than its width across the front face 18 or the rear face.

The spacer blocks 26 will be referred to in this description as, from bottom to top in Figure 1: a first spacer block 26A; a second spacer block 26B; a third spacer block 26C; a fourth spacer block 26D; and a fifth spacer block 26E.

Two of the brackets 20 that support the rollers 22 are mounted on the first spacer block 26A and, in this example, overlap onto and embrace the second spacer block 26B. The brackets 20 that support the other two rollers 22 are mounted on the fifth spacer block 26E and, in this example, overlap onto and embrace the fourth spacer block 26D. The brackets 20 thereby help to hold together those pairs of abutting spacer blocks 26A, 26B and 26D, 26E.

Each group of tubes 12 or cables 14 is a coplanar parallel array that is sandwiched between abutting spacer blocks 26 of the stack. Each group is therefore aligned in the stack with a respective planar interface 28 between abutting spacer blocks 26. Each through-hole 16 is bisected by the interface 28 between abutting spacer blocks 26.

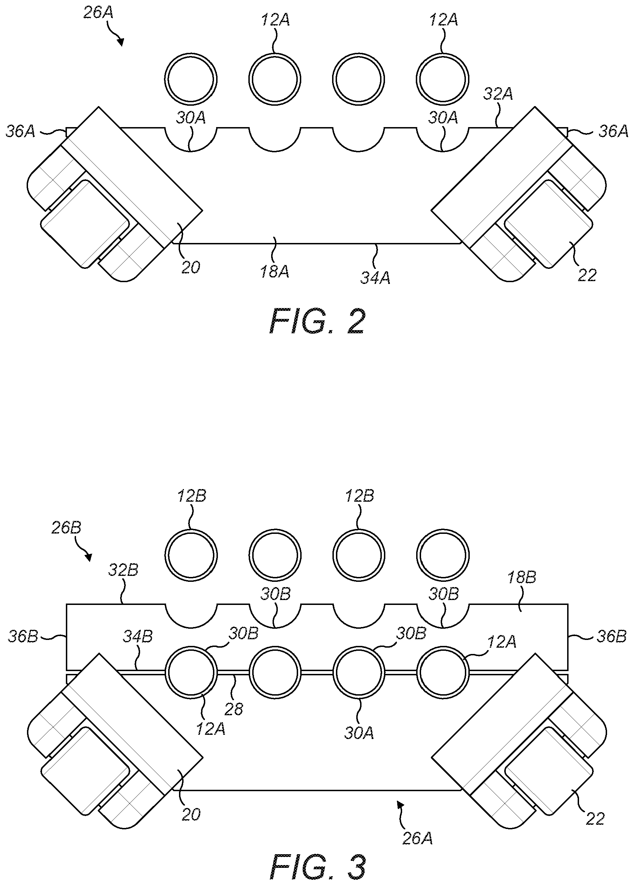

In this respect, reference is now also made to Figures 2 and 3. Figure 2 shows the first spacer block 26A and the first group of tubes 12A. Figure 3 shows the interaction between the first and second spacer blocks 26A, 26B to embrace and engage the first group of tubes 12A.

Specifically, Figures 2 and 3 show that the circular cross-section of each through-hole 16 is defined by a pair of substantially semi-circular channels 30, one channel 30 of each pair being on each of the first and second spacer blocks 26A, 26B. The channels 30 are aligned in mutual opposition when those spacer blocks 26A, 26B are stacked in mutual abutment as shown in Figure 3.

It will be apparent from Figure 2 that the first spacer block 26A is a laterally elongate regular frustum comprising paired opposed planar faces, namely: a top mating face 32A and a parallel bottom face 34A, both rectangular; oppositely-inclined end faces 36A, both rectangular, whose inclination defines the chamfered corners of the spacer 10; and a front face 18A and a parallel rear face, both being substantially in the shape of isosceles trapeziums. The rear face is not visible in this view. The top mating face 32A, the bottom face 34A and the end faces 36A all lie in planes that are orthogonal to the planes of the front face 18A and the rear face.

The top mating face 32A of the first spacer block 26A is interrupted by an inset array of parallel open-ended channels 30A, each extending from the front face 18A to the rear face. Figure 2 shows a first group of tubes 12A aligned with the channels 30A in the top mating face 32A, ready for assembly with the first spacer block 26A. The radius of curvature of each channel 30A matches the outer radius of curvature of each tube 12A.

Figure 3 shows the second spacer block 26B now engaged with the first spacer block 26A and sandwiching the first group of tubes 12A between them. Conveniently, engagement between the spacer blocks 26A, 26B may be effected simply by friction at their mutual interface when the second spacer block 26B is stacked onto the first spacer block 26A.

The second spacer block 26B shown in Figure 3 is a laterally elongate cuboid that comprises paired opposed planar faces, all substantially rectangular, namely: a top mating face 32B and a parallel bottom mating face 34B; parallel end faces 36B; and a front face 18B and a parallel rear face, which again is not visible in this view. The faces of each pair lie in planes that are orthogonal to the planes of the faces of the other pairs.

The top and bottom mating faces 32B, 34B of the second spacer block 26B are each interrupted by inset arrays of parallel open-ended channels 30B. The array of channels 30B on the bottom mating face 34B is a mirror image of the corresponding channels 30A on the top mating face 32A of the first spacer block 26A. When the spacer blocks 26A, 26B are stacked together such that the bottom mating face 34B of the second spacer block 26B is opposed to the top mating face 32A of the first spacer block 26A, the aligned channels 30A, 30B of the spacer blocks 26 come together around the tubes 12A of the first group. The conjoined channels 30A, 30B thereby complete the through-holes 16 that hold the first group of tubes 12A in the spacer 10 as shown in Figure 1.

The array of channels 30B on the top mating face 32B of the second spacer block 26B corresponds to the array of channels 30A on the top mating face 32A of the first spacer block 26A. Figure 3 shows a second group of tubes 12B aligned with the channels 30B in the top mating face 32B, ready for assembly with the second spacer block 26B.

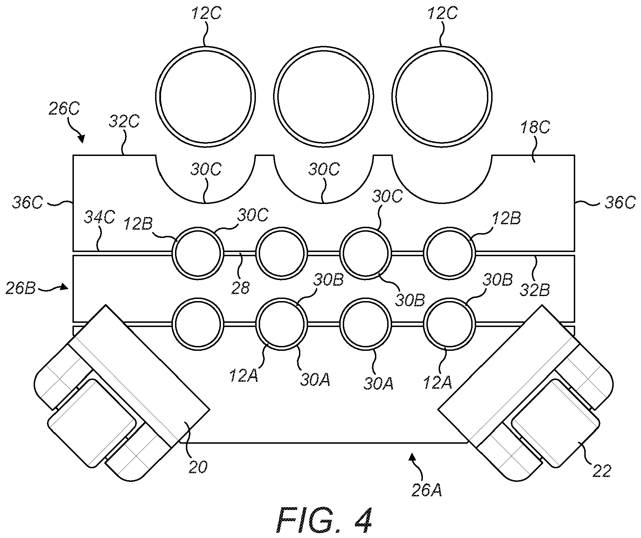

Figure 4 shows the third spacer block 26C now engaged with the second spacer block 26B and sandwiching the second group of tubes 12B between them. Like the second spacer block 26B, the third spacer block 26C is a laterally elongate cuboid that comprises paired opposed planar faces, all substantially rectangular, namely: a top mating face 32C and a parallel bottom mating face 34C; parallel end faces 36C; and a front face 18C and a parallel rear face that is not visible in this view. Again, the faces of each pair lie in planes that are orthogonal to the planes of the faces of the other pairs.

The top and bottom mating faces 32C, 34C of the third spacer block 26C are each interrupted by inset arrays of parallel open-ended channels 30C. The array of channels 30C on the bottom mating face 34C is a mirror image of the corresponding channels 30B on the top mating face 32B of the second spacer block 26B. Thus, when the spacer blocks 26B, 26C are stacked together such that the bottom mating face 34C of the third spacer block 26C is opposed to the top mating face 32B of the second spacer block 26B, the aligned channels 30B, 30C of the spacer blocks 26B, 26C come together around the tubes 12B of the second group. The conjoined channels 30B, 30C thereby complete the through-holes 16 that hold the second group of tubes 12B in the spacer 10 as shown in Figure 1.

The channels 30C on the top mating face 32C of the third spacer block 26C are enlarged to accommodate the larger tubes 12C of the third group. The tubes 12C of the third group are shown in Figure 4 aligned with those channels 30C, ready for assembly with the third spacer block 26C.

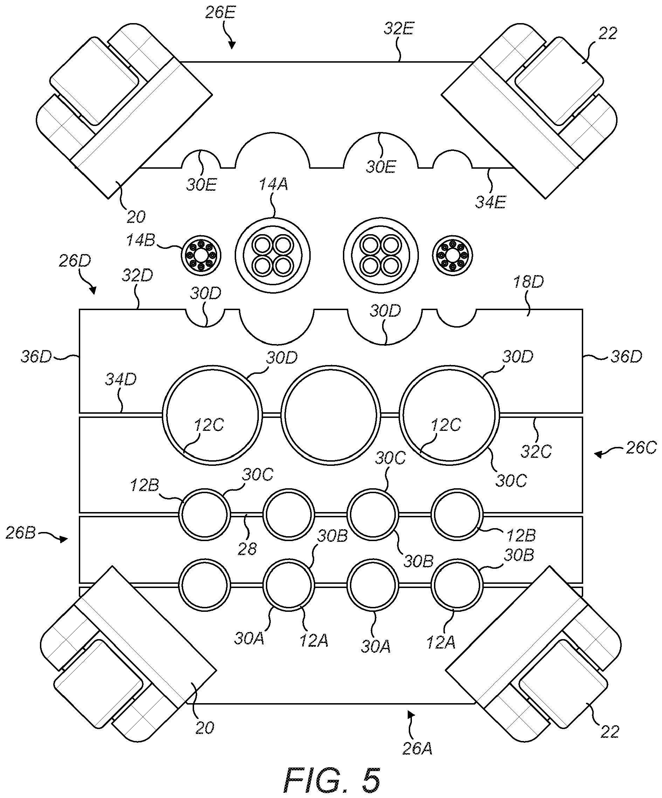

Figure 5 shows the fourth spacer block 26D now engaged with the third spacer block 26C and sandwiching the third group of enlarged tubes 12C between them. Again, the fourth spacer block 26D is a laterally elongate cuboid that comprises paired opposed planar faces, all substantially rectangular, namely: a top mating face 32D and a parallel bottom mating face 34D; parallel end faces 36D; and a front face 18D and a parallel rear face that is not visible in this view. Similarly, the faces of each pair lie in planes that are orthogonal to the planes of the faces of the other pairs.

The top and bottom mating faces 32D, 34D of the fourth spacer block 26D are each interrupted by inset arrays of parallel open-ended channels 30D. The array of channels 30D on the bottom mating face 34D is a mirror image of the corresponding channels 30C on the top mating face 32C of the third spacer block 26C, and so those channels 30D are similarly enlarged. When the spacer blocks 26C, 26D are stacked together such that the bottom mating face 34D of the fourth spacer block 26D is opposed to the top mating face 32C of the third spacer block 26C, the aligned channels 30C, 30D of the spacer blocks 26C, 26D come together around the tubes 12C of the third group. The conjoined channels 30C, 30D thereby complete the through-holes 16 that hold the third group of tubes 12C in the spacer 10 as shown in Figure 1.

The array of channels 30D on the top mating face 32D of the fourth spacer block 26D differ in size to accommodate the cables 14A, 14B that, correspondingly, differ in size across their group. The cables 14A, 14B are shown in Figure 5 aligned with those channels 30D, ready for assembly with the fifth spacer block 26E to form the spacer 10 shown in Figure 1.

It will be apparent from Figures 1 and 5 that the fifth spacer block 26E is an inverted counterpart of the first spacer block 26A in most respects. However, the fifth spacer block 26E has a bottom mating face 34E opposed to a parallel top face 32E. Also, the channels 30E of the bottom mating face 34E are a mirror image of the corresponding channels 30D on the top mating face 32D of the fourth spacer block 26D, and so are similarly of different sizes. Thus, when the spacer blocks 26D, 26E are stacked together such that the bottom mating face 34E of the fifth spacer block 26E is opposed to the top mating face 32D of the fourth spacer block 26D, the aligned channels 30D, 30E of the spacer blocks 26D, 26E come together around the cables 14A, 14B. The conjoined channels 30D, 30E thereby complete the through-holes 16 that hold the cables 14A, 14B in the spacer 10 as shown in Figure 1.

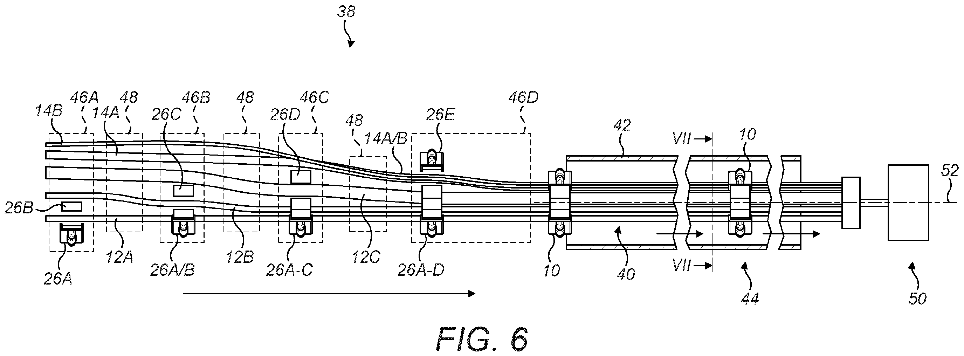

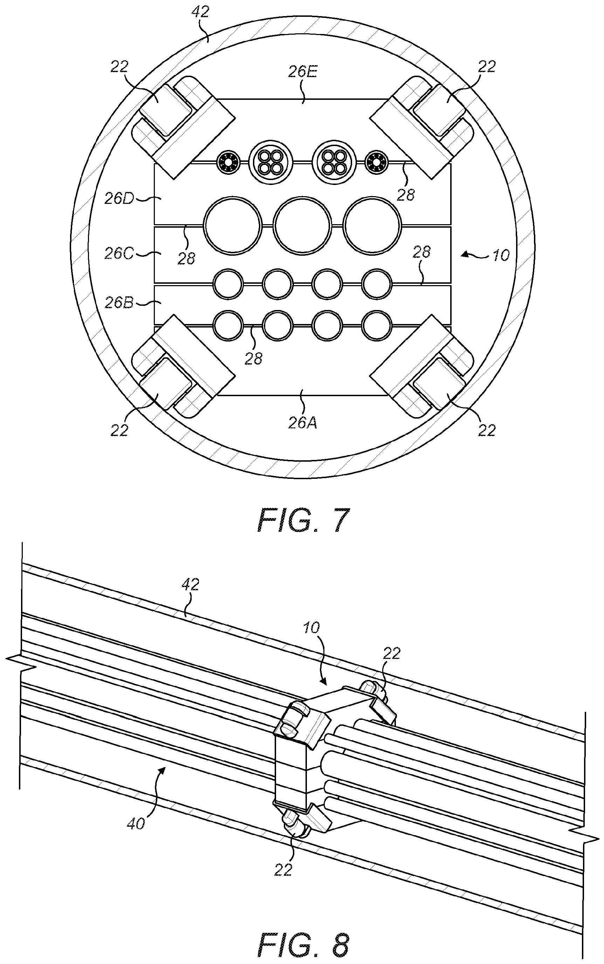

Moving on now to Figure 6, this shows an assembly facility 38 of the invention in which the first, second and third groups of tubes 12A-C and the group of cables 14A, 14B converge from left to right onto parallel paths to form a bundle 40. Simultaneously, spacers 10 are assembled from spacer blocks 26A-E between and around the groups of tubes 12A-C and cables 14A, 14B to hold the bundle together. Then, the elongate assembly of the bundle 40 and the spacers 10 is inserted telescopically into and along a carrier pipe 42, which is also shown in Figures 7 and 8, to produce a control umbilical 44 of the invention.

In this example, the spacers 10 are assembled at a series of assembly stations 46A-D. Guide systems 48 are interspersed between the assembly stations 46A-D to guide the convergent tubes 12A-C and cables 14A, 14B into alignment with the various spacer blocks 26A-E as shown in Figures 1 to 5.

The process of assembling one spacer 10 is shown in this schematic diagram. However, in practice, multiple spacers 10 will be assembled sequentially as the tubes 12A-C and cables 14A, 14B move past one or more assembly stations 46, typically being advanced together in a stepwise manner. The completed spacers 10 are distributed along the length of the bundle 40 as shown.

Figure 6 shows the second spacer block 26B being assembled with the first spacer block 26A around the first group of tubes 12A at the first workstation 46A. Next, the third spacer block 26C is shown being added to the first and second spacer blocks 26A, 26B around the second group of tubes 12B at the second workstation 46B. Then, at the third workstation 46C, the fourth spacer block 26D is shown being added to the first to third spacer blocks 26A-C around the third group of tubes 12C. Finally, at the fourth and last workstation 46D, the fifth and final spacer block 26E is added to the first to fourth spacer blocks 26A-D around the group of cables 14A, 14B to complete the spacer 10 and also to complete the bundle 40.

A pulling system 50 acting on the bundle 40 in tension pulls the bundle 40 and the spacers 10 into and along the carrier pipe 42. The fifth spacer block 26E is added to the first to fourth spacer blocks 26A-D at the fourth workstation 46D to complete the spacer 10, immediately before the spacer 10 is carried by the advancing bundle 40 into an open end of the carrier pipe 42.

The rollers 22 of the spacers 10 are equi-angularly spaced about the central longitudinal axis 52 of the carrier pipe 42. Thus, as best appreciated in the cross-sectional view of Figure 7, all four rollers 22 of each spacer 10 engage with, and roll along, the inner surface of the carrier pipe 42. Consequently, the spacers 10 keep the bundle 40 centred within the carrier pipe 42 and clear of the inner surface of the carrier pipe 42. The radial clearance between the bundle 40 and the carrier pipe 42 allows the carrier pipe 42 to bend along its length during transportation and installation of the umbilical 44 and in use, without clashing with the bundle 40 within.

The carrier pipe 42 may be fabricated from tubular lengths of steel joined end-to-end, for example by welding, or may be a continuous tubular length of a polymer or polymer composite material. In each case, the inner surface of the carrier pipe 42 is sufficiently smooth that the spacers 10 can roll along it with minimal resistance. The carrier pipe 42 also has enough structural integrity to bend along its length without collapsing or buckling.

As noted above, engagement between the spacer blocks 26 may conveniently be effected simply by friction at their mutual interfaces 28 when the spacer blocks 26 are stacked together. To keep the spacer blocks 26 together in the stack and hence to maintain the structural integrity of the spacer 10, the friction between any two abutting spacer blocks 26 and the tubes 12 or cables 14 at their mutual interface 28 exceeds the resistance to movement of the spacer 10 along the carrier pipe 42.

In this respect, the feature that the thickness of the spacer 10 exceeds the height of each spacer block 26 increases both the stability of the spacer blocks 26 and the abutting interface area that is available for frictional contact. Also, the mating faces 32, 34 of the spacer blocks 26 could have a high-friction surface such as a roughened finish to increase their frictional engagement with the mating faces 32, 34 of abutting spacer blocks 26.

On entering the carrier pipe 42, the stack of spacer blocks 26 that form the spacer 10 are held together by the surrounding wall of the carrier pipe 42. In particular, the spacer blocks 26 cannot tip relative to abutting spacer blocks 26, thus ensuring the stability and structural integrity of the spacer 10 as a whole.

In the example illustrated, the width of the spacer 10 is slightly oversized with respect to the inner diameter of the carrier pipe 42 so that the spacer 10 is squeezed radially inwardly against resilient deformation of the spacer blocks 26 on entering the carrier pipe 42. This beneficially increases the frictional forces that act between the stacked spacer blocks 26 and that grip the tubes 12 and the cables 14 of the bundle 40.

In this respect, the spacer blocks 26 are shown in Figures 1 to 5 as being slightly separated with a small clearance between them along their mutual interfaces 28. This clearance between the spacer blocks 26 on initial assembly ensures that, when within the carrier pipe 42, the spacer blocks 26 will bear against and therefore grip the tubes 12 and cables 14 of the bundle 40. When a spacer 10 enters the carrier pipe 42, the spacer blocks 26 are forced together and the clearances between them at their mutual interfaces 28 substantially disappear, as shown in Figure 7, as they deflect slightly under inward radial pressure from the surrounding carrier pipe 42. Thus, each spacer block 26 is then in frictional contact with one or more abutting spacer blocks 26 across substantially the full area of their mutual interfaces 28.

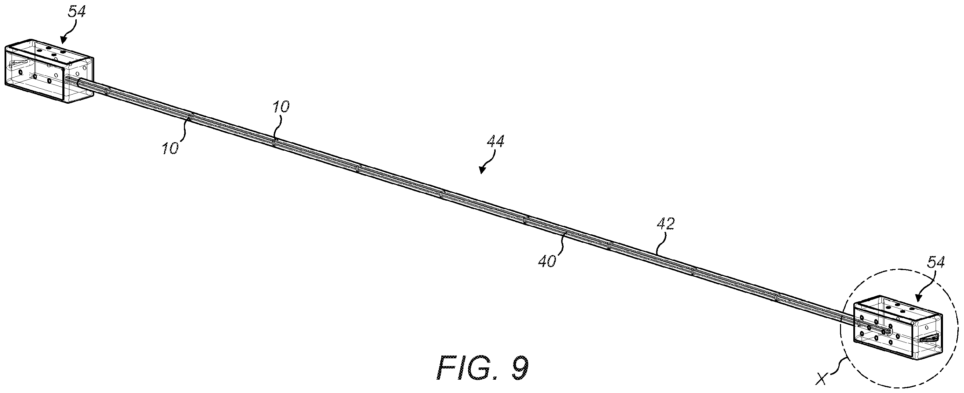

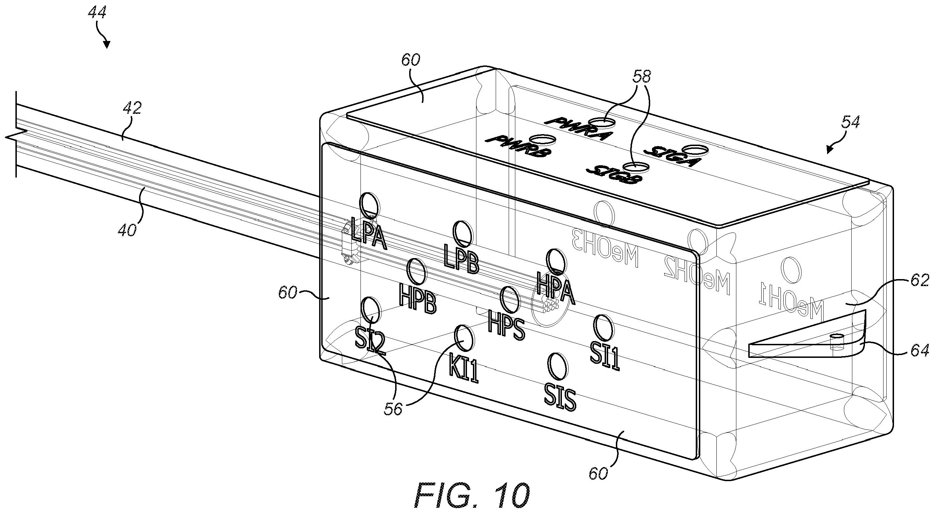

Moving on now to Figures 9 and 10, these drawings show an umbilical 44 of the invention that includes two UTAs 54, one at each end. One of the UTAs 54 is shown schematically in more detail in the enlarged view of Figure 10.

It will be apparent from Figure 9 that the spacers 10 are distributed with substantially equal longitudinal spacing along the length of the bundle 40 within the carrier pipe 42.

The carrier pipe 42 may extend as a single monolithic structure along its full length from one UTA 54 to the other UTA 54, as is possible if the carrier pipe 42 is of a polymer or composite material such as TCP. Alternatively the carrier pipe 42 may comprise a series of shorter pipe lengths joined end to end, for example being fabricated by welding together a succession of steel pipe joints.

Figure 10 shows that each UTA 54 comprises an array of ports 56, each of which is in fluid communication with a respective one of the tubes 12 of the bundle 40 within the carrier pipe 42. Each UTA 54 also comprises an array of electrical sockets 58, each of which is connected electrically to a respective one of the cables 14 of the bundle 40.

Thus, the UTA 54 serves as a head for the umbilical 44 and contains piping and cables that join the tubes 12 and cables 14 of the bundle 40 to a set of connection elements such as the ports 56 and sockets 58.The ports 56 and the sockets 58 provide for the umbilical 44 to be connected fluidly and electrically to other equipment at a subsea location. For this purpose, flexible jumper pipes may be connected to the ports 56 and the plugs of flying leads may be coupled with the sockets 58.

Figure 10 also shows that each UTA 54 has a fabricated box-section structure comprising a longitudinally-elongate cuboidal skeleton of tubular steel members 60. This structure has sufficient strength for the UTA 54 to serve as a towhead when towing the umbilical 44 through the water from an onshore assembly site to an offshore installation site. In this respect, a cross-member 62 at a front end of the UTA supports an attachment point 64 for a towing line.

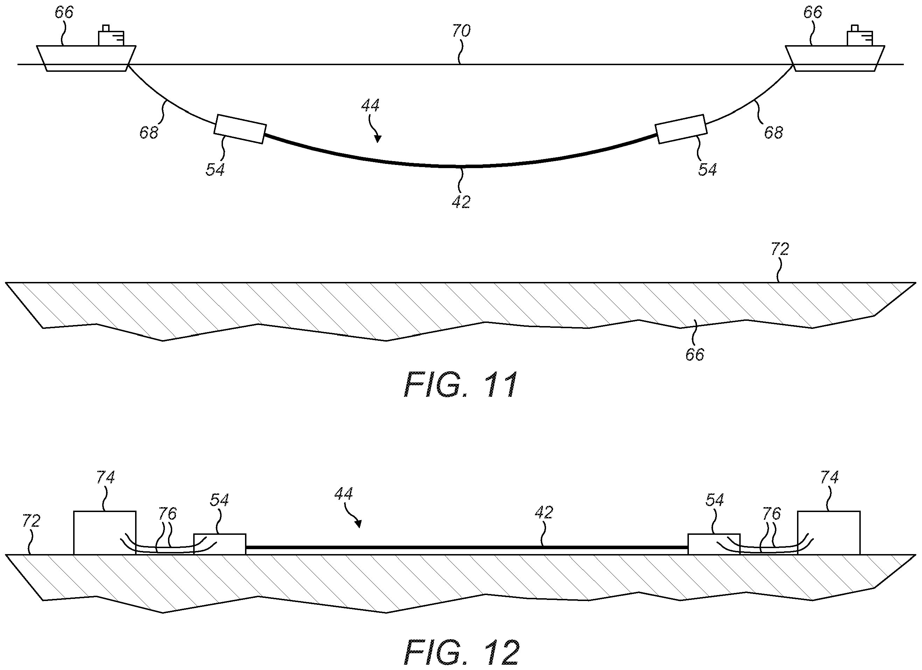

One or both of the UTAs 54 may have attachment points 64 for towing lines. To illustrate the latter possibility, Figure 11 shows the umbilical 44 being towed between leading and trailing towing vessels 66 that suspend the umbilical 44 from respective towing lines 68 attached to the UTAs 54. The umbilical 44 is shown here being towed at a mid-water depth in the water column between the surface 70 and the seabed 72. For example, the umbilical 44 may be towed by the controlled depth towing method (CDTM) as known in the art. Chains or other ballast weights may be distributed along the umbilical 44 for stability during towing but have been omitted from this simplified view.

Figure 12 shows the umbilical 44 now lowered from the towing vessels 66 to the seabed 72 and connected to, and extending between, mutually-spaced items of subsea equipment 74 on the seabed 72. Each UTA 54 is shown connected to a respective item of subsea equipment 74 by elongate connections 76 such as jumper pipes and flying leads.

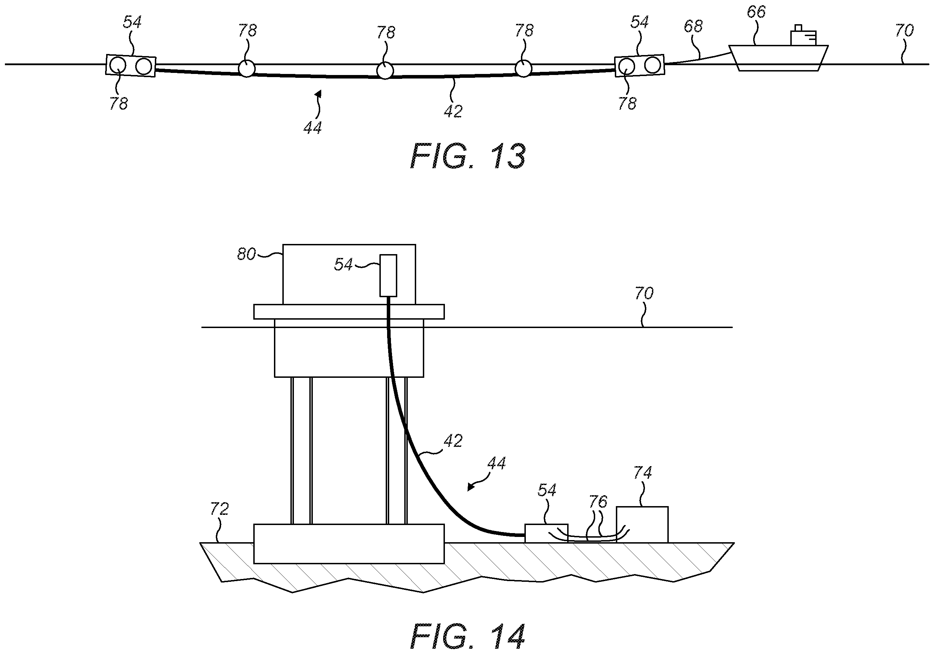

Figure 13 shows another towing method in which a single towing vessel 66 tows the umbilical 44 at the surface 70. The umbilical 44 is shown here supported by buoyancy modules 78 that are distributed along its length and are also attached to the UTAs 54. On reaching the installation site, at least some of the buoyancy modules 78 can be removed, or their buoyancy can be reduced, to allow at least one end of the umbilical 44 to sink to the seabed 72.

Finally, Figure 14 shows the umbilical 44 hanging as a catenary from a surface installation 80 to be connected to an item of subsea equipment 74 on the seabed 72. Again, elongate connections76 such as jumper pipes and flying leads effect the necessary connections between a UTA 54 at the lower end of the umbilical 44 and the subsea equipment 74.

The surface installation 80 is exemplified in Figure 14 by a platform but it could instead be a surface vessel such as an FPSO. Whilst two UTAs 54 are shown, the UTA 54 at the upper end of the umbilical 44 could be omitted and connections could be made in other ways between the surface installation 80 and the tubes 12 and cables 14 that are bundled within the carrier pipe 42 of the umbilical 44.

Many other variations are possible within the inventive concept as defined by the claims. For example, tubes and cables could be mixed in the same group, or the bundle could contain only cables or only tubes.

In principle, the umbilical of the invention could be stored, transported and installed by conventional reel-lay methods. In that case, a UTA could be preinstalled on a free end of the umbilical that is not spooled onto a reel. If required, one or more UTAs could be attached to the umbilical offshore aboard a reel-lay vessel when installing the umbilical. Where the umbilical is configured to be installed by reel-lay, the or each UTA need not be equipped to serve as a towhead.

Whilst Figure 6 proposes assembly of the bundle as the bundle is being inserted into the carrier pipe, it would be possible instead to assemble the bundle fully before insertion. For example, short umbilicals could be made by stacking the spacer blocks with the groups of tubes and cables between them and then advancing the resulting complete bundle of tubes, cables and spacers telescopically into a carrier pipe. Similarly, the carrier pipe could be advanced around or assembled around a completed bundle.

## Claims

1. A subsea control bundle umbilical (44), comprising:
a carrier pipe (42);
a bundle (40) of two or more elongate functional elements (12, 14) being tubes and/or cables that extend longitudinally within the carrier pipe (42); and
spacers (10) spaced apart longitudinally along the bundle (40), the spacers (10) supporting the functional elements (12, 14) of the bundle (40) and being movable longitudinally relative to the carrier pipe (42);
wherein the carrier pipe (42) contains no tubes (12) with an inner diameter of greater than 70mm.

2. The umbilical (44) of Claim 1, wherein any tube (12) within the carrier pipe (42) contains only a control fluid or a service fluid for supporting production of hydrocarbons.

3. The umbilical (44) of any preceding claim, further comprising at least one connection head (54) that is positioned at an end of the carrier pipe (42) and comprises connection elements (56, 58) that are in fluid communication or electrical contact with respective functional elements (12, 14) of the bundle (40).

4. The umbilical (44) of Claim 3, wherein the at least one connection head (54) is a towhead that comprises a towing line attachment point (64) supported by a frame configured for towing the umbilical (44) before installation.

5. The umbilical (44) of any preceding claim, wherein the carrier pipe (42) is a monolithic pipe of polymer or polymer composite material.

6. The umbilical (44) of any of Claims 1 to 4, wherein the carrier pipe (42) comprises a series of pipe lengths joined end to end.

7. The umbilical (44) of any preceding claim, wherein the carrier pipe (42) has an outer diameter of no greater than ten inches (254mm).

8. The umbilical (44) of any preceding claim, wherein at least one of the spacers (10) comprises a stack of two or more blocks (26) and at least one opening (16) that extends along a longitudinal axis through the spacer (10) at an interface (28) between abutting blocks (26) of the stack to receive a respective elongate functional element (12, 14) of the umbilical (44), wherein outer blocks (26) of the stack support rollers (22) that are angularly spaced in a circular array.

9. The umbilical (44) of Claim 8, wherein the interface (28) is substantially planar but is interrupted by at least one open-ended channel (30) for receiving a respective one of the functional elements (12, 14).

10. The umbilical (44) of Claim 9, wherein each opening (16) is defined by alignment between opposed channels (30) in the abutting blocks (26) of the stack.

11. The umbilical (44) of any of Claims 8 to 10, wherein each block (26) of the stack has a thickness on the longitudinal axis that exceeds its height on an axis that is orthogonal to the longitudinal axis and to the interface (28).

12. The umbilical (44) of any of claims 8 to 11, wherein the rollers (22) are supported by brackets (20) that each embrace one of the outer blocks (26).

13. The umbilical (44) of Claim 12, wherein each bracket (20) engages at least two blocks (26) of the stack.

14. The umbilical (44) of any of Claims 8 to 13, wherein one or more inner blocks (26) of the stack are substantially cuboidal.

15. The umbilical (44) of any of Claims 8 to 14, wherein frictional force between the abutting blocks (26) of the spacer (10) and one or more of the functional elements (12, 14) at the interface (28) exceeds resistance to movement of the spacer (10) relative to the carrier pipe (42) in a direction parallel to the longitudinal axis.

16. A subsea installation comprising at least one umbilical (44) of any preceding claim.

17. A method of making a subsea control bundle umbilical (44), the method comprising:
assembling a bundle (40) comprising two or more spacers (10) that support two or more elongate functional elements (12, 14) being tubes with an inner diameter of no more than 70mm and/or cables, the spacers (10) being spaced apart longitudinally along the bundle (40); and
inserting the bundle (40) longitudinally into a carrier pipe (42) to extend longitudinally within the carrier pipe (42).

18. The method of Claim 17, comprising pulling the bundle (40) into the carrier pipe (42).

19. The method of Claim 17 or Claim 18, further comprising attaching at least one connection head (54) to an end of the carrier pipe (42) and effecting fluid communication or electrical contact between connection elements (56, 58) of the connection head (54) and respective functional elements (12, 14) of the bundle (40).

20. The method of any of Claims 17 to 19, further comprising towing the umbilical (44) to an installation site using a towing line (68) attached to the connection head (54).

21. The method of any of Claims 17 to 20, comprising assembling each spacer (10) as a stack of two or more blocks (26), with each functional element (12, 14) extending through the stack at an interface (28) between abutting blocks (26) of the stack.

22. The method of Claim 21, comprising adding a final block (26) to the stack to complete the spacer (10) immediately before the spacer (10) enters the carrier pipe (42) during insertion of the bundle (40).

23. The method of Claim 21 or Claim 22, comprising exerting radially-inward pressure from the carrier pipe (42) onto the spacer (10) to clamp the functional elements (12, 14) between blocks (26) of the stack.

24. The method of any of Claims 21 to 23, comprising holding the abutting blocks (26) together only by friction between the blocks (26) and one or more of the functional elements (12, 14) at the interface (28).

## Patentansprüche

1. Unterwassersteuerungsbündelnabelschnur (44), umfassend:
ein Trägerrohr (42);
ein Bündel (40) von zwei oder mehr länglichen Funktionselementen (12, 14), die Schläuche und/oder Kabel sind, die sich in Längsrichtung innerhalb des Trägerrohrs (42) erstrecken; und
Abstandshalter (10), die in Längsrichtung entlang des Bündels (40) beabstandet sind, wobei die Abstandshalter (10) die Funktionselemente (12, 14) des Bündels (40) unterstützen und in Längsrichtung relativ zu dem Trägerrohr (42) bewegbar sind;
wobei das Trägerrohr (42) keine Schläuche (12) mit einem Innendurchmesser von mehr als 70 mm enthält.

2. Nabelschnur (44) nach Anspruch 1, wobei ein beliebiger Schlauch (12) innerhalb des Trägerrohrs (42) nur ein Steuerfluid oder ein Betriebsfluid zum Unterstützen einer Produktion von Kohlenwasserstoffen enthält.

3. Nabelschnur (44) nach einem der vorstehenden Ansprüche, ferner umfassend mindestens einen Verbindungskopf (54), der an einem Ende des Trägerrohrs (42) positioniert ist und Verbindungselemente (56, 58) umfasst, die in Fluidkommunikation oder elektrischen Kontakt mit jeweiligen Funktionselementen (12, 14) des Bündels (40) stehen.

4. Nabelschnur (44) nach Anspruch 3, wobei der mindestens eine Verbindungskopf (54) ein Schleppkopf ist, der einen Schleppleinenbefestigungspunkt (64) umfasst, der durch einen Rahmen unterstützt wird, der zum Schleppen der Nabelschnur (44) vor einer Installation konfiguriert ist.

5. Nabelschnur (44) nach einem der vorstehenden Ansprüche, wobei das Trägerrohr (42) ein monolithisches Rohr aus Polymer oder Polymerverbundmaterial ist.

6. Nabelschnur (44) nach einem der Ansprüche 1 bis 4, wobei das Trägerrohr (42) eine Reihe von Schlauchlängen umfasst, die durchgehend zusammengefügt sind.

7. Nabelschnur (44) nach einem der vorstehenden Ansprüche, wobei das Trägerrohr (42) einen Außendurchmesser von nicht mehr als zehn Zoll (254 mm) aufweist.

8. Nabelschnur (44) nach einem der vorstehenden Ansprüche, wobei mindestens einer der Abstandshalter (10) einen Stapel von zwei oder mehr Blöcken (26) und mindestens eine Öffnung (16) umfasst, die sich entlang einer Längsachse durch den Abstandshalter (10) hindurch an einer Schnittstelle (28) zwischen Stoßblöcken (26) des Stapels erstreckt, um ein jeweiliges längliches Funktionselement (12, 14) der Nabelschnur (44) aufzunehmen, wobei Außenblöcke (26) der Stapelunterstützrollen (22), die in einer kreisförmigen Anordnung winkelbeabstandet sind.

9. Nabelschnur (44) nach Anspruch 8, wobei die Schnittstelle (28) im Wesentlichen eben ist, aber durch mindestens einen Kanal (30) mit offenem Ausgang zum Aufnehmen eines jeweiligen der Funktionselemente (12, 14) unterbrochen ist.

10. Nabelschnur (44) nach Anspruch 9, wobei jede Öffnung (16) durch eine Ausrichtung zwischen gegenüberliegenden Kanälen (30) in den Stoßblöcken (26) des Stapels definiert ist.

11. Nabelschnur (44) nach einem der Ansprüche 8 bis 10, wobei jeder Block (26) des Stapels eine Dicke auf der Längsachse aufweist, die seine Höhe auf einer Achse überschreitet, die orthogonal zu der Längsachse und zu der Schnittstelle (28) ist.

12. Nabelschnur (44) nach einem der Ansprüche 8 bis 11, wobei die Rollen (22) durch Halterungen (20) unterstützt werden, die jeweils einen der Außenblöcke (26) umschließen.

13. Nabelschnur (44) nach Anspruch 12, wobei jede Halterung (20) in mindestens zwei Blöcke (26) des Stapels eingreift.

14. Nabelschnur (44) nach einem der Ansprüche 8 bis 13, wobei ein oder mehrere Innenblöcke (26) des Stapels im Wesentlichen quaderförmig sind.

15. Nabelschnur (44) nach einem der Ansprüche 8 bis 14, wobei eine Reibungskraft zwischen den Stoßblöcken (26) des Abstandshalters (10) und einem oder mehreren der Funktionselemente (12, 14) an der Schnittstelle (28) einen Widerstand gegen eine Bewegung des Abstandshalters (10) relativ zu dem Trägerrohr (42) in einer Richtung parallel zu der Längsachse überschreitet.

16. Unterwasserinstallation, umfassend mindestens eine Nabelschnur (44) nach einem der vorstehenden Ansprüche.

17. Verfahren zum Herstellen einer Unterwassersteuerbündelnabelschnur (44), das Verfahren umfassend:
Zusammenbauen eines Bündels (40), umfassend zwei oder mehr Abstandshalter (10), die zwei oder mehr längliche Funktionselemente (12, 14) unterstützen, die Schläuche mit einem Innendurchmesser von nicht mehr als 70 mm und/oder Kabeln sind, wobei die Abstandshalter (10) in Längsrichtung entlang des Bündels (40) beabstandet sind; und
Einführen des Bündels (40) in Längsrichtung in ein Trägerrohr (42), um sich in Längsrichtung innerhalb des Trägerrohrs (42) zu erstrecken.

18. Verfahren nach Anspruch 17, umfassend das Ziehen des Bündels (40) in das Trägerrohr (42).

19. Verfahren nach Anspruch 17 oder 18, ferner umfassend ein Befestigen mindestens eines Verbindungskopfs (54) an einem Ende des Trägerrohrs (42) und Bewirken einer Fluidkommunikation oder eines elektrischen Kontakts zwischen den Verbindungselementen (56, 58) des Verbindungskopfs (54) und jeweiligen Funktionselementen (12, 14) des Bündels (40).

20. Verfahren nach einem der Ansprüche 17 bis 19, ferner umfassend das Schleppen der Nabelschnur (44) an eine Installationsstelle unter Verwendung einer Schleppleine (68), die an dem Verbindungskopf (54) befestigt ist.

21. Verfahren nach einem der Ansprüche 17 bis 20, umfassend das Zusammenbauen jedes Abstandshalters (10) als einen Stapel von zwei oder mehr Blöcken (26), wobei jedes Funktionselement (12, 14) sich durch den Stapel hindurch an einer Schnittstelle (28) zwischen Stoßblöcken (26) des Stapels erstreckt.

22. Verfahren nach Anspruch 21, umfassend ein Hinzufügen eines Endblocks (26) zu dem Stapel, um den Abstandshalter (10), unmittelbar bevor der Abstandshalter (10) in das Trägerrohr (42) während einer Einführung des Bündels (40) eintritt, abzuschließen.

23. Verfahren nach Anspruch 21 oder 22, umfassend ein Ausüben eines radial nach innen gerichteten Drucks von dem Trägerrohr (42) auf den Abstandshalter (10), um die Funktionselemente (12, 14) zwischen den Blöcken (26) des Stapels zu klemmen.

24. Verfahren nach einem der Ansprüche 21 bis 23, umfassend ein Zusammenhalten der Stoßblöcke (26) nur durch Reibung zwischen den Blöcken (26) und einem oder mehreren der Funktionselemente (12, 14) an der Schnittstelle (28).

## Revendications

1. Ombilical de faisceau de commande sous-marin (44), comprenant :
un tuyau porteur (42) ;
un faisceau (40) de deux ou plusieurs éléments fonctionnels allongés (12, 14) sous forme de tubes et/ou de câbles qui s'étendent longitudinalement à l'intérieur du tuyau porteur (42) ; et
des espaceurs (10) espacés longitudinalement le long du faisceau (40), les espaceurs (10) supportant les éléments fonctionnels (12, 14) du faisceau (40) et étant mobiles longitudinalement par rapport au tuyau porteur (42) ;
dans lequel le tuyau porteur (42) ne contient aucun tube (12) dont le diamètre intérieur est supérieur à 70 mm.

2. Ombilical (44) selon la revendication 1, dans lequel tout tube (12) à l'intérieur du tuyau porteur (42) ne contient qu'un fluide de contrôle ou un fluide de service destiné à soutenir la production d'hydrocarbures.

3. Ombilical (44) selon l'une quelconque des revendications précédentes, comprenant en outre au moins une tête de connexion (54) positionnée à une extrémité du tuyau porteur (42) et comprenant des éléments de connexion (56, 58) qui sont en communication fluidique ou en contact électrique avec des éléments fonctionnels respectifs (12, 14) du faisceau (40).

4. Ombilical (44) selon la revendication 3, dans lequel l'au moins une tête de connexion (54) est une tête de remorquage qui comprend un point d'attache de ligne de remorquage (64) supporté par un cadre configuré pour remorquer l'ombilical (44) avant l'installation.

5. Ombilical (44) selon l'une quelconque des revendications précédentes, dans lequel le tuyau porteur (42) est un tuyau monolithique en polymère ou en matériau composite polymère.

6. Ombilical (44) selon l'une quelconque des revendications 1 à 4, dans lequel le tuyau porteur (42) comprend une série de longueurs de tuyaux jointes bout à bout.

7. Ombilical (44) selon l'une des revendications précédentes, dans lequel le tuyau porteur (42) a un diamètre extérieur ne dépassant pas dix pouces (254 mm).

8. Ombilical (44) selon l'une quelconque des revendications précédentes, dans lequel au moins un des espaceurs (10) comprend une pile de deux blocs (26) ou plus et au moins une ouverture (16) qui s'étend le long d'un axe longitudinal à travers l'espaceur (10) à une interface (28) entre les blocs contigus (26) de la pile afin de recevoir un élément fonctionnel allongé respectif (12, 14) de l'ombilical (44), dans lequel les blocs extérieurs (26) de la pile supportent des rouleaux (22) qui sont angulairement espacés dans un réseau circulaire.

9. Ombilical (44) selon la revendication 8, dans lequel l'interface (28) est sensiblement plane mais est interrompue par au moins un canal ouvert (30) destiné à recevoir l'un des éléments fonctionnels (12, 14).

10. Ombilical (44) selon la revendication 9, dans lequel chaque ouverture (16) est définie par l'alignement entre des canaux opposés (30) dans les blocs contigus (26) de la pile.

11. Ombilical (44) selon l'une quelconque des revendications 8 à 10, dans lequel chaque bloc (26) de la pile a une épaisseur sur l'axe longitudinal qui dépasse sa hauteur sur un axe orthogonal à l'axe longitudinal et à l'interface (28).

12. Ombilical (44) selon l'une quelconque des revendications 8 à 11, dans lequel les rouleaux (22) sont soutenus par des supports (20) qui embrassent chacun l'un des blocs extérieurs (26).

13. Ombilical (44) selon la revendication 12, dans lequel chaque support (20) s'engage dans au moins deux blocs (26) de la pile.

14. Ombilical (44) selon l'une des revendications 8 à 13, dans lequel un ou plusieurs blocs intérieurs (26) de la pile sont sensiblement cubiques.

15. Ombilical (44) selon l'une des revendications 8 à 14, dans lequel la force de frottement entre les blocs contigus (26) de l'espaceur (10) et un ou plusieurs des éléments fonctionnels (12, 14) à l'interface (28) dépasse la résistance au mouvement de l'espaceur (10) par rapport au tuyau porteur (42) dans une direction parallèle à l'axe longitudinal.

16. Installation sous-marine comprenant au moins un ombilical (44) selon l'une quelconque des revendications précédentes.

17. Procédé de fabrication d'un ombilical (44) de faisceau de commande sous-marin, comprenant :
l'assemblage d'un faisceau (40) comprenant deux ou plusieurs espaceurs (10) qui supportent deux ou plusieurs éléments fonctionnels allongés (12, 14), à savoir des tubes dont le diamètre intérieur ne dépasse pas 70 mm et/ou des câbles, les espaceurs (10) étant espacés longitudinalement le long du faisceau (40) ; et
l'insertion d'un faisceau (40) longitudinalement dans un tuyau porteur (42) pour qu'il s'étende longitudinalement à l'intérieur du tuyau porteur (42).

18. Procédé selon la revendication 17, comprenant la traction du faisceau (40) dans la tuyau porteur (42).

19. Procédé selon la revendication 17 ou la revendication 18, comprenant en outre la fixation d'au moins une tête de connexion (54) à une extrémité du tuyau porteur (42) et l'établissement d'une communication fluidique ou d'un contact électrique entre les éléments de connexion (56, 58) de la tête de connexion (54) et les éléments fonctionnels respectifs (12, 14) du faisceau (40).

20. Procédé selon l'une quelconque des revendications 17 à 19, comprenant en outre le remorquage de l'ombilical (44) vers un site d'installation à l'aide d'une ligne de remorquage (68) attachée à la tête de connexion (54).

21. Procédé selon l'une quelconque des revendications 17 à 20, comprenant l'assemblage de chaque espaceur (10) sous forme d'une pile de deux blocs (26) ou plus, chaque élément fonctionnel (12, 14) s'étendant à travers la pile au niveau de l'interface (28) entre les blocs contigus (26) de la pile.

22. Procédé selon la revendication 21, comprenant l'ajout d'un dernier bloc (26) à la pile pour compléter l'espaceur (10) juste avant que l'espaceur (10) ne pénètre dans le tuyau porteur (42) pendant l'insertion du faisceau (40).

23. Procédé selon la revendication 21 ou la revendication 22, comprenant l'exercice d'une pression radiale vers l'intérieur du tuyau porteur (42) sur l'espaceur (10) pour serrer les éléments fonctionnels (12, 14) entre les blocs (26) de la pile.

24. Procédé selon l'une quelconque des revendications 21 à 23, comprenant le maintien des blocs contigus (26) ensemble uniquement par friction entre les blocs (26) et un ou plusieurs des éléments fonctionnels (12, 14) à l'interface (28).
